# EUROPEAN PATENT SPECIFICATION

(11) **EP 4 145 611 B1**
(45) Date of publication and mention of the grant of the patent: **01.04.2026**
(21) Application number: 21854235.5
(22) Date of filing: 05.08.2021
(51) Int. Cl.: H01M 50/342, H01M 50/528, H01M 10/04, H01M 50/166

(54) **SECONDARY BATTERY**
SEKUNDÄRBATTERIE
BATTERIE SECONDAIRE

(30) Priority: 05.08.2020 KR 20200098168; 04.08.2021 KR 20210102809
(43) Date of publication of application: 08.03.2023
(73) Proprietor: LG Energy Solution, Ltd., Seoul 07335 (KR)
(72) Inventor: CHOI, Eun Sun, Daejeon 34122 (KR); LEE, Kwan Soo, Daejeon 34122 (KR); JANG, Wook Hee, Daejeon 34122 (KR); JEGAL, Jong Pil, Daejeon 34122 (KR)
(74) Representative: Goddar, Heinz J.
(86) International application number: PCT/KR2021/010315
(87) International publication number: WO 2022/031065

(56) References cited:
- WO-A1-2020/129479
- JP-A- 2014 197 463
- KR-A- 20100 099 458
- KR-A- 20170 018 667
- KR-A- 20170 142 986
- KR-B1- 100 855 181
- US-A1- 2019 006 776

## Description

### TECHNICAL FIELD

The present invention relate to a secondary battery.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

The electrode assembly may be approximately classified into a jelly roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

Among them, the jelly-roll type electrode assembly is widely used because the jelly-roll type electrode assembly has an advantage is easily manufactured and has high energy density per weight.

In the cylindrical secondary battery comprising existing jelly-roll type electrode assembly, notching is performed in a lower portion of the top cap assembly to facilitate venting of a gas inside the battery when an event of increasing in pressure inside the battery occurs.

In the case of the cylindrical secondary battery without having a top cap and a separate current interrupt device (CID), a positive electrode tab is welded to the lower portion inside the notched portion, and a terminal of a pack or application is welded to an upper portion so that current flows.

The configuration of the current path has a problem in that even if the event occurs inside the battery to be vented, the current is continuously applied to the battery to cause explosion.

In the case of the conventional cylindrical secondary battery having the top cap and the separate current interrupt device (CID), the CID, a safety vent, and the top cap are sequentially provided upward from a lower portion of the cylindrical top cap assembly, and a central portion of the safety vent is bent downward and connected to a top surface of the CID. Also, when a gas is generated inside the battery, the central portion of the safety vent is reversed upward due to the increase in pressure, and the connection between the CID and the safety vent is released and short-circuited. Here, a pressure required for the short circuit is called a CID short-circuit pressure.

In addition, if more gas is generated after the CID is short-circuited, the safety vent is torn, and the internal gas is discharged. Here, the pressure is called a venting pressure.

[Prior Art Document] (Patent Document) Korean Patent Publication No. 10-2016-0010121.

The prior art relevant to the present invention is given by WO 2020/129479 A1 and JP 2014 197463 A.

WO 2020/129479 A1, forming the basis for the preamble of claim 1, describes a sealed battery equipped with a battery case. It shows a sealed battery which includes an electrode body, a cylindrical outer can, and a sealing body. The electrode body comprises a long positive electrode, a long negative electrode and a separator alternately wrapped and wound together. The cylindrical outer can comprise an accommodation part in which the electrode body is housed, the can having an opened upper portion. The sealing body, configured to seal the opening of the outer can together with a gasket, includes a valve portion surrounded by a thin-walled portion with an annular groove, and an outer annular portion. The thin-walled portion is ruptured when an internal pressure of the battery increases. The annular groove of the thin-walled portion is formed in a circular shape without corners. The electrode body comprises a positive electrode lead and a negative electrode lead connected to each of the electrodes. The valve portion is connected to the electrode lead and an external lead. The electrode lead and the external lead are connected to different sides of an inner side and an outer side with respect to the thin-walled portion with an annular groove in the valve portion in the plan view.

JP 2014 197463 A describes a secondary battery comprising a bottomed-cylindrical conductive case which houses an electrode group and is sealed at its opening by a single-sided conductive terminal plate. The case bottom includes an inner thin-walled portion, of greater cut depth surrounding its centre, and an outer thin-walled portion, of shallower depth, formed around the periphery of the inner portion. An internal lead extending from the electrode group is welded to the inner surface of the case bottom within the inner thin-walled portion, and an external lead is welded to the case bottom in the region between the inner and outer thin-walled portions.

### DISCLOSURE OF THE INVENTION

### TECHNICAL PROBLEM

The present invention is defined according to the subject matter of the appended independent claims. Particular embodiments are given by the features of the dependent claims.

One aspect of the present invention is to provide a secondary battery in which current is capable of being cut off when venting occurs due to an internal factor of the battery.

### TECHNICAL SOLUTION

A secondary battery according to an embodiment of the present invention is defined in claim 1.

A battery pack according to an embodiment of the present invention may comprise the secondary battery according to an embodiment of the present invention.

### ADVANTAGEOUS EFFECTS

According to the present invention, the electrode tab and the external terminal may be respectively connected to the different sides of the inner side and the outer side with respect to the notching part in the plan view of the safety vent. Thus, when the internal pressure of the battery increases, the notching part is ruptured to cut off the current during the venting.

### BRIEF DESCRIPTION OF THE DRAWINGS

FIG. 1 is a cross-sectional view of a secondary battery according to a comparative example.
FIG. 2 is a cross-sectional view illustrating a state in which a notching part of a safety vent is ruptured in the secondary battery according to a comparative example.
FIG. 3 is a cross-sectional view illustrating a cap assembly of the secondary battery according to a comparative example.
FIG. 4 is a front view illustrating a safety vent in the secondary battery according to a comparative example.
FIG. 5 is a cross-sectional view of a secondary battery according to an embodiment of the present invention.
FIG. 6 is a cross-sectional view illustrating a state in which a notching part of a safety vent is ruptured in the secondary battery according to another embodiment of the present invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

### Secondary battery according to a comparative example

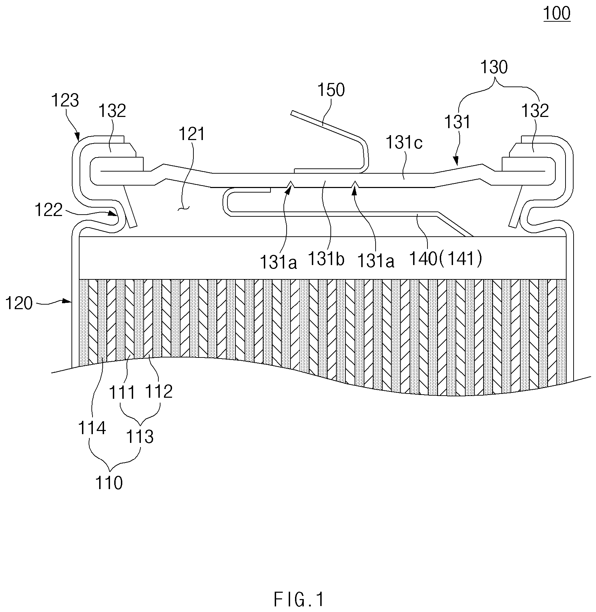

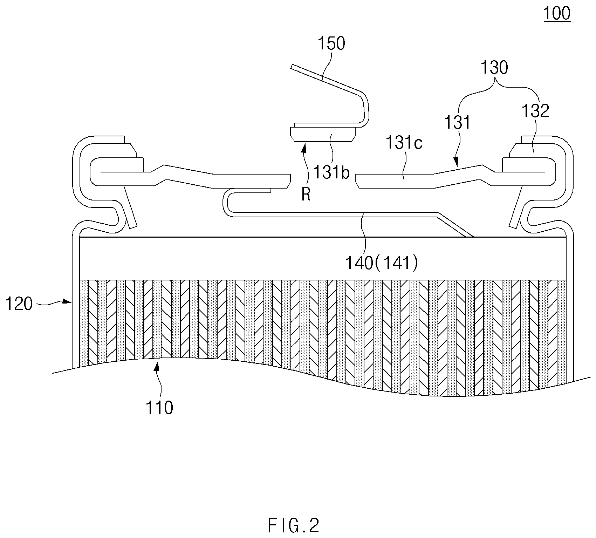

FIG. 1 is a cross-sectional view of a secondary battery according to a comparative example, and FIG. 2 is a cross-sectional view illustrating a state in which a notching part of a safety vent is ruptured in the secondary battery according to a comparative example.

Referring to FIGS. 1 and 2, a secondary battery 100 comprises an electrode assembly 110, in which electrodes 113 and separators 114 are alternately stacked to be wound, an opened can 120, in which the electrode assembly 110 is accommodated, and a cap assembly 130 covering the opening of the can 120. In addition, the cap assembly 130 comprises a safety vent 131 comprising a notching part 131a that is ruptured when an internal pressure of the battery increases.

Hereinafter, the secondary battery 100 will be described in more detail.

Referring to FIGS. 1 and 2, the electrode assembly 110 may be a chargeable and dischargeable power generation element and have a structure in which the electrode 113 and the separator 114 are combined and alternately stacked with each other. Here, the electrode assembly 110 may be formed in a shape in which the electrodes 113 and the separator 114 are alternately combined to be wound. Here, the electrode assembly 110 may be wound in a cylindrical shape wound around a central axis.

The electrodes 113 may comprise a positive electrode 112 and a negative electrode 111. Also, the separator 114 separates and electrically insulates the positive electrode 112 and the negative electrode 111 from each other.

The positive electrode 112 may comprise a positive electrode collector and a positive electrode active material provided on one surface of the positive electrode collector. Here, the positive electrode 112 may comprise a positive electrode non-coating portion that is an area on which the positive electrode active material is not stacked.

For example, the positive electrode collector may be provided as foil made of an aluminum material.

The positive electrode active material may comprise lithium manganese oxide, lithium cobalt oxide, lithium nickel oxide, lithium iron phosphate, or a compound or mixture containing at least one of the above-described materials.

The negative electrode 111 may comprise a negative electrode collector and a negative electrode active material stacked on one surface of the negative electrode collector. Here, the negative electrode 111 may comprise a negative electrode non-coating portion that is an area on which the negative electrode active material is not stacked.

The negative electrode collector may be made of, for example, a copper foil made of a copper (Cu) material.

The negative electrode active material may comprise synthetic graphite, lithium a metal, a lithium alloy, carbon, petroleum coke, activated carbon, graphite, a silicon compound, a tin compound, a titanium compound, or an alloy thereof. Here, the negative electrode active material may further comprise, for example, non-graphite-based SiO (silica) or SiC (silicon carbide).

The separator 114 may be made of an insulating material to insulate the positive electrode 112 and the negative electrode 111 from each other.

Also, the separator 114 may be, for example, a multilayered film produced by microporous polyethylene, polypropylene, or a combination thereof or a polymer film for solid polymer electrolytes or gel-type polymer electrolytes such as polyvinylidene fluoride, polyethylene oxide, polyacrylonitrile, or polyvinylidene fluoride hexafluoropropylene copolymers.

In the secondary battery 100, the electrode assembly 110 may comprise an electrode tab 140 connected to the electrode.

The electrode tab 140 is attached to the electrode 113 and is electrically connected to the electrode 113.

The electrode tab 140 may comprise a positive electrode tab 141 connected to the positive electrode 112 and a negative electrode tab connected to the negative electrode 111.

Referring to FIG. 1, the positive electrode tab 141 may be formed in a direction in which the cap assembly 130 is disposed, i.e., in an upward direction.

The can 120 may be formed in a cylindrical shape in which an accommodation part 121, in which the electrode assembly 110 is accommodated, is formed, and an upper portion thereof is opened. In this case, the can 120 may be formed, for example, in a cylindrical shape.

The can 120 may be bent toward an inner side 131b to allow the cap assembly 130 to be mounted thereon so that a beading part 122 forming a recessed groove is formed on an outer side 131c. In this case, the cap assembly 130 may be seated on the beading part 122 to cover the opening of the can 120.

The can 120 may comprise a crimping part formed to surround an edge of the cap assembly 130 at an upper portion thereof. Here, the crimping part 123 may comprise an outer circumferential portion formed in a longitudinal direction of the can 120 and an upper end perpendicular to the longitudinal direction of the can 120.

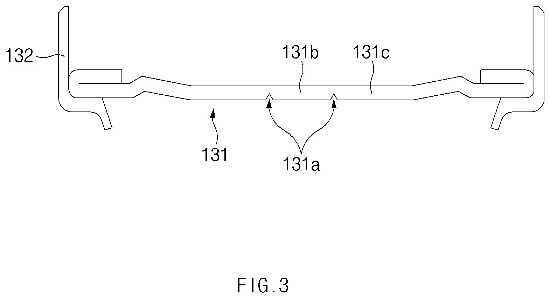

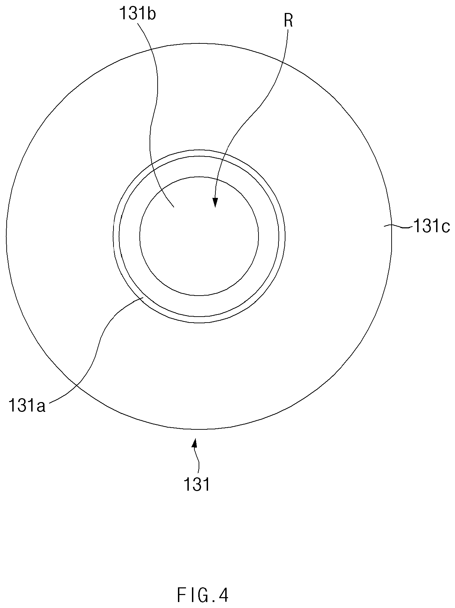

FIG. 3 is a cross-sectional view illustrating the cap assembly of the secondary battery according to a comparative example, and FIG. 4 is a front view illustrating a safety vent in the secondary battery.

Referring to FIGS. 1 to 4, the cap assembly 130 may be mounted on an upper portion of the can 120 to cover the opening of the can 120.

The cap assembly 130 may comprise a safety vent 131 comprising a notching part, which is ruptured when an internal pressure of the battery increases, and a gasket 132 that seals a gap between the safety vent 131 and the can 120 to insulates between the safety vent 131 and the can 120.

The safety vent 131 may be connected to the electrode tab 140 and an external terminal 150.

When viewed in a plan view, the notching part 131a may be formed in a circular shape on a plane and may be formed at a central portion of the safety vent 131. That is, the notching part 131a may be formed in a circular shape at a central portion on a bottom view illustrated in FIG. 4.

The notching part 131a may be formed on a bottom surface of the safety vent 131. In this case, the notching part 131a may be formed as, for example, a groove having a triangular cross-section.

A distance between a central axis of the safety vent 131 and the notching part 131a may be less than half a radius of the safety vent 131.

The safety vent 131 has a rupture part R ruptured along the notching part 131a at a central side thereof, and when the internal pressure of the battery is greater than or equal to a venting pressure, the notching part 131a may be ruptured so that the rupture part R is separated from the safety vent 131. Here, the venting pressure is referred to as a pressure at which the safety vent 131 is torn due to an increase in internal pressure to generate an internal gas as the internal gas is generated in the battery. As a result, when the internal pressure of the battery due to the generation of the gas in the battery reaches the venting pressure or more, the notching part 131a may be ruptured, and thus, the rupture part R may be separated from the safety vent 131 to cut off the current.

A gasket 132 may be provided along an outer circumferential surface of the safety vent 131 to surround an edge of the safety vent 131. Here, the crimping part 123 of the can 120 may be formed to surround the outer side 131c of the gasket 132 to seal a gap between the can 120 and the cap assembly 130.

The cap assembly 130 of the secondary battery may be constituted by the safety vent 131 and the gasket 132 without a current interrupt device (CID), a filter, and a CID gasket. Thus, the components may be simplified, and manufacturing cost may be reduced. As a result, there is an effect of reducing battery resistance and improving performance due to the simplification of the components.

The electrode tab 140 and the external terminal 150 may be connected to different sides of the inner side 131b and the outer side 131c with respect to the notching part 131a in the plan view of the safety vent 131. Here, the electrode tab 140 may be connected to the outer side 131c of the notching part 131a of the safety vent 131 in the plan view, and the external terminal 150 may be connected to the inner side 131b of the notching part 131a of the safety vent 131 in the plan view.

In the electrode tab 140, the positive electrode tab 141 may be provided at an upper side of the electrode assembly 110 and be connected to a lower end of the safety vent 131, and the external terminal 150 may be connected to an upper end of the safety vent 131.

In addition, the positive electrode tab 141 may be welded to a lower end of the safety vent 131, and the external terminal 150 may be welded to an upper end of the safety vent 131.

The external terminal 150 may be provided as a connection wire of an external pack or application.

Referring to FIG. 1, in the secondary battery 100, which is configured as described above, the external terminal 150 may be connected to the inner side 131b with respect to the notching part 131a of the safety vent 131 in the plan view, and the electrode tab 140 may be connected to the outer side 131c.

Thus, referring to FIG. 2, as the internal pressure increases due to an increase in the internal gas, the notching part 131a may be ruptured to cut off the current during the venting. That is, when the notching part 131a forming a circular notching line in the plan view is ruptured, the rupture part R may be separated from the safety vent 131, and the electrical connection between the external terminal 150 fixed to the rupture part R, i.e., the inner side 131b of the safety vent 131, and the electrode tab 140 fixed to the outer side 131c of the safety vent 131 may be released.

As a result, when the venting occurs due to the increase in internal pressure, in the safety vent 131, the inner side 131b of the notching part 131a, which is connected to the external terminal 150, may be ruptured and then separated from the outer side 131c of the notching part 131a connected to the electrode tab 140 to completely cut off the current, thereby preventing the secondary battery from being exploded due to the continuous apply of the current.

### Secondary battery according to an embodiment

Hereinafter, a secondary battery according to another embodiment will be described.

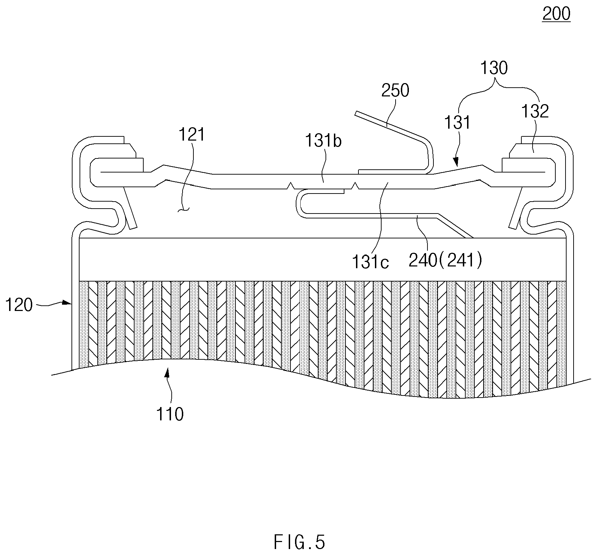

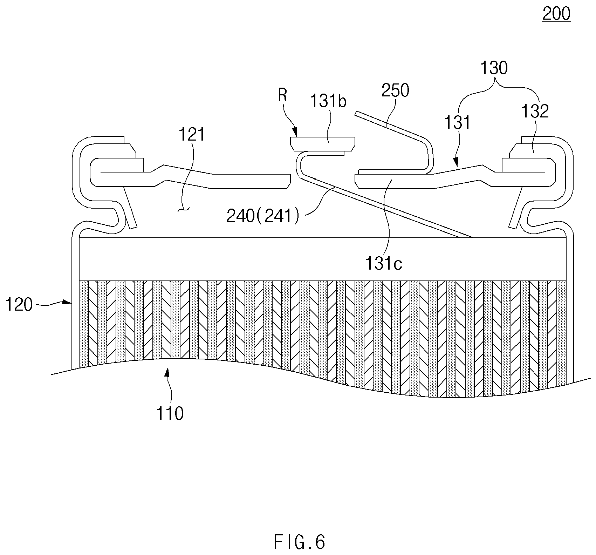

FIG. 5 is a cross-sectional view of a secondary battery according to an embodiment of the present invention, and FIG. 6 is a cross-sectional view illustrating a state in which a notching part of a safety vent is ruptured in the secondary battery according to another embodiment of the present invention.

Referring to FIGS. 5 and 6, a secondary battery 200 according to the present invention comprises an electrode assembly 110, in which electrodes 113 and separators 114 are alternately stacked to be wound, an opened can 120, in which the electrode assembly 110 is accommodated, and a cap assembly 130 covering the opening of the can 120. In addition, the cap assembly 130 comprises a safety vent 131 comprising a notching part 131a that is ruptured when an internal pressure of the battery increases.

The secondary battery 200 according to an embodiment of the present invention is different from the secondary battery according to the comparative example in connection positions of an electrode tab 240, an external terminal, and a safety vent 131. Thus, contents of this embodiment, which are duplicated with those according to the forgoing example, will be omitted or briefly described, and also, differences therebetween will be mainly described.

In more detail, the electrode assembly 110 may be a chargeable and dischargeable power generation element and have a structure in which an electrode 113 and a separator 114 are combined and alternately stacked. Here, the electrode assembly 110 may be formed in a shape in which the electrodes 113 and the separator 114 are alternately combined to be wound. Here, the electrode assembly 110 may be wound in a cylindrical shape wound around a central axis.

The electrodes 113 comprise a positive electrode 112 and a negative electrode 111. Also, the separator 114 separates and electrically insulates the positive electrode 112 and the negative electrode 111 from each other.

In the secondary battery 200 according to the present invention, the electrode assembly 110 comprises an electrode tab 240 connected to the electrode 113.

The electrode tab 240 is attached to the electrode 113 and is electrically connected to the electrode 113.

The electrode tab 240 comprises a positive electrode tab 241 connected to the positive electrode 112 and a negative electrode tab connected to the negative electrode 111.

The positive electrode tab 241 may be formed in a direction in which the cap assembly 130 is disposed, i.e., in an upward direction.

The can 120 may be formed in a cylindrical shape in which an accommodation part 121, in which the electrode assembly 110 is accommodated, is formed, and an upper portion thereof is opened. In this case, the can 120 may be formed, for example, in a cylindrical shape.

The can 120 may be bent toward an inner side 131b to allow the cap assembly 130 to be mounted thereon so that a beading part 122 forming a recessed groove is formed on an outer side 131c. In this case, the cap assembly 130 may be seated on the beading part 122 to cover the opening of the can 120.

The can 120 may comprise a crimping part formed to surround an edge of the cap assembly 130 at an upper portion thereof. Here, the crimping part 123 may comprise an outer circumferential portion formed in a longitudinal direction of the can 120 and an upper end perpendicular to the longitudinal direction of the can 120.

The cap assembly 130 may be mounted on an upper portion of the can 120 to cover the opening of the can 120.

The cap assembly 130 comprises a safety vent 131 comprising a notching part 131a, which is ruptured when an internal pressure of the battery increases, and a gasket 132 that seals a gap between the safety vent 131 and the can 120 to insulates between the safety vent 131 and the can 120.

The safety vent 131 is connected to the electrode tab 240 and an external terminal 250.

The notching part 131a may be formed at a central portion of the safety vent 131 in the plan view.

A distance between a central axis of the safety vent 131 and the notching part 131a may be less than half a radius of the safety vent 131.

The safety vent 131 has a rupture part R ruptured along the notching part 131a at a central side thereof, and when the internal pressure of the battery is greater than or equal to a venting pressure, the notching part 131a may be ruptured so that the rupture part R is separated from the safety vent 131.

The electrode tab 240 and the external terminal 250 are connected to different sides of the inner side 131b and the outer side 131c with respect to the notching part 131a in the plan view of the safety vent 131. Here, the electrode tab 240 is connected to the inner side 131b of the notching part 131a of the safety vent 131 in the plan view, and the external terminal 250 is connected to the outer side 131c of the notching part 131a of the safety vent 131 in the plan view.

The positive electrode tab 241 may be provided at an upper side of the electrode assembly 110 and be connected to a lower end of the safety vent 131, and the external terminal 250 may be connected to an upper end of the safety vent 131.

The positive electrode tab 241 may be welded to a lower end of the safety vent 131, and the external terminal 250 may be welded to an upper end of the safety vent 131.

The external terminal 250 may be provided as a connection wire of an external pack or application.

Referring to FIG. 5, in the secondary battery 200, which is configured as described above, according to another embodiment of the present invention, the external terminal 250 is connected to the outer side 131c with respect to the notching part 131a of the safety vent 131 in the plan view, and the electrode tab 240 is connected to the inner side 131b.

Thus, referring to FIG. 6, as the internal pressure increases due to an increase in the internal gas, the notching part 131a may be ruptured to cut off the current during the venting. That is, when the notching part 131a forming a circular notching line in the plan view is ruptured, the rupture part R may be separated from the safety vent 131, and the electrical connection between the electrode tab 240 fixed to the rupture part R, i.e., the inner side 131b of the notching part 131a of the safety vent 131 and the external terminal 250 connected to the outer side 131c of the notching part 131a may be released.

As a result, when the venting occurs due to the increase in internal pressure, in the safety vent 131, the inner side 131b of the notching part 131a, which is connected to the positive electrode tab 241 of the electrode tab 240, may be ruptured and then separated from the outer side 131c of the notching part 131a connected to the external terminal 250 to completely cut off the current, thereby preventing the secondary battery from being exploded due to the continuous apply of the current.

Here, an insulation film is applied to an outer surface of the positive electrode tab 241 to completely prevent the positive electrode tab 241 from being in contact with the outer side 131c of the notching part 131a, to which the external terminal 250 is fixed, in the safety vent 131 when the rupture part R is separated from the safety vent 131, and thus, the positive electrode tab 241 fixed to the rupture part R moves.

A battery pack may comprise a plurality of secondary batteries, each of which is configured as described above. The battery pack may be provided in shape, in which the plurality of secondary batteries are electrically connected to each other and then are accommodated in the battery pack. Here, the plurality of secondary batteries may be connected to each other through a connection wire. In this case, the connection wire may be connected to the upper end of the safety vent in the secondary battery as the external terminal.

While the present invention has been particularly shown and described with reference to exemplary embodiments thereof, it is to be understood that the scope of the present invention is not limited thereto. It will be understood by those of ordinary skill in the art that various changes in form and details may be made therein.

### [Description of the Symbols]

100, 200: Secondary battery
110: Electrode assembly
111: Negative electrode
112: Positive electrode
113: Electrode
114: Separator
120: Can
121: Accommodation part
122: Beading part
123: Crimping part
130: Cap assembly
131: Safety vent
131a: Notching part
131b: Inner side
131c: Outer side
132: Gasket
140, 240: Electrode tab
141, 241: Positive electrode tab
150, 250: External terminal
R: Rupture part

## Claims

1. A secondary battery (200) comprising:
an electrode assembly (110) in which electrodes and separators (114) are alternately stacked to be wound;
a cylindrical can (120) comprising an accommodation part (121), in which the electrode assembly (110) is accommodated, the can (120) having an opened upper portion; and
a cap assembly (130) configured to cover an opening of the can (120),
wherein the cap assembly (130) comprises a safety vent (131) comprising a notching part (131a) that is ruptured when an internal pressure of the battery increases,
the notching part (131a) has a circular shape in a plan view,
the electrode assembly (110) comprises an electrode tab (240) connected to each of the electrodes (113),
wherein the electrodes (113) comprise a positive electrode (112) and a negative electrode (111),
the electrode tab (240) comprises a positive electrode tab (241) connected to the positive electrode (112),
the positive electrode tab (241) is provided at an upper side of the electrode assembly (110) and is connected to a lower end of the safety vent (131), and
the external terminal (250) is connected to an upper end of the safety vent (131),
wherein the safety vent (131) comprises a rupture part (R) that is ruptured along the notching part (131a) at a central side thereof, and
when the internal pressure of the battery is greater than or equal to a venting pressure, the notching part (131a) is ruptured so that the rupture part (R) is separated from the safety vent (131);
**characterized in that**
the electrode tab (240) is connected to an inner side (131b) of the notching part (131a) of the safety vent (131) in the plan view,
the external terminal (250) is connected to an outer side (131c) of the notching part (131a) of the safety vent (131) in the plan view, and
an insulation film is applied to the outer surface of the positive electrode tab (241).

2. The secondary battery (200) of claim 1, wherein the positive electrode tab (241) is welded to a lower end of the safety vent (131), and the external terminal (250) is welded to an upper end of the safety vent (131).

3. The secondary battery (200) of claim 1, wherein the external terminal (250) is provided as an connection wire of an external pack or application.

4. The secondary battery (200) of claim 1, wherein the notching part (131a) is formed at a central portion of the safety vent (131) in the plan view.

5. The secondary battery (200) of claim 1, wherein the cap assembly (130) further comprises a gasket (132) configured to seal a gap between the safety vent (131) and the can (120) and insulate the safety vent (131) and the can (120) from each other,
the can (120) comprises a crimping part (123) formed to surround the gasket (132) so as to fix the cap assembly (130).

6. The secondary battery (200) of claim 1, wherein a distance between a central axis of the safety vent (131) and the notching part (131a) is less than half a radius of the safety vent (131).

7. A battery pack comprising the secondary battery (200) of any one of claims 1 to 6.

## Patentansprüche

1. Sekundärbatterie (200) aufweisend:
eine Elektrodenanordnung (110), in der Elektroden und Separatoren (114) abwechselnd gestapelt sind, um gewickelt zu werden;
eine zylindrische Dose (120) aufweisend einen Aufnahmeabschnitt (121), in dem die Elektrodenanordnung (110) aufgenommen ist, wobei die Dose (120) einen geöffneten oberen Abschnitt aufweist; und
eine Kappenanordnung (130), die konfiguriert ist, um eine Öffnung der Dose (120) abzudecken,
wobei die Kappenanordnung (130) eine Sicherheitsentlüftung (131) aufweist, die einen Kerbabschnitt (131a) aufweist, der zerbrochen wird, wenn ein Innendruck der Batterie ansteigt,
wobei der Kerbabschnitt (131a) in einer Draufsicht eine kreisförmige Form aufweist,
wobei die Elektrodenanordnung (110) eine Elektrodenlasche (240) aufweist, die mit jeder der Elektroden (113) verbunden ist,
wobei die Elektroden (113) eine positive Elektrode (112) und eine negative Elektrode (111) aufweisen,
wobei die Elektrodenlasche (240) eine positive Elektrodenlasche (241) aufweist, die mit der positiven Elektrode (112) verbunden ist,
wobei die positive Elektrodenlasche (241) an einer Oberseite der Elektrodenanordnung (110) bereitgestellt ist und mit einem unteren Ende der Sicherheitsentlüftung (131) verbunden ist, und
wobei der externe Anschluss (250) mit einem oberen Ende der Sicherheitsentlüftung (131) verbunden ist,
wobei die Sicherheitsentlüftung (131) einen Bruchabschnitt (R) aufweist, der entlang des Kerbabschnitts (131a) an einer zentralen Seite davon zerbrochen wird, und
wenn der Innendruck der Batterie größer oder gleich einem Entlüftungsdruck ist, der Kerbabschnitt (131a) zerbrochen wird, so dass der Bruchabschnitt (R) von der Sicherheitsentlüftung (131) getrennt wird;
**dadurch gekennzeichnet, dass**
die Elektrodenlasche (240) in der Draufsicht mit einer Innenseite (131b) des Kerbabschnitts (131a) der Sicherheitsentlüftung (131) verbunden ist,
der externe Anschluss (250) in der Draufsicht mit einer Außenseite (131c) des Kerbabschnitts (131a) der Sicherheitsentlüftung (131) verbunden ist, und
ein Isolierfilm auf die Außenfläche der positiven Elektrodenlasche (241) aufgebracht ist.

2. Sekundärbatterie (200) nach Anspruch 1, wobei die positive Elektrodenlasche (241) an ein unteres Ende der Sicherheitsentlüftung (131) geschweißt ist, und der externe Anschluss (250) an ein oberes Ende der Sicherheitsentlüftung (131) geschweißt ist.

3. Sekundärbatterie (200) nach Anspruch 1, wobei der externe Anschluss (250) als ein Verbindungsdraht einer externen Packung oder Anwendung bereitgestellt ist.

4. Sekundärbatterie (200) nach Anspruch 1, wobei der Kerbabschnitt (131a) in der Draufsicht an einem zentralen Abschnitt der Sicherheitsentlüftung (131) ausgebildet ist.

5. Sekundärbatterie (200) nach Anspruch 1, wobei die Kappenanordnung (130) ferner eine Dichtung (132) aufweist, die konfiguriert ist, um einen Spalt zwischen der Sicherheitsentlüftung (131) und der Dose (120) dicht zu verschließen und die Sicherheitsentlüftung (131) und die Dose (120) voneinander zu isolieren,
wobei die Dose (120) einen Crimpabschnitt (123) aufweist, der ausgebildet ist, um die Dichtung (132) zu umgeben, um die Kappenanordnung (130) zu fixieren.

6. Sekundärbatterie (200) nach Anspruch 1, wobei ein Abstand zwischen einer zentralen Achse der Sicherheitsentlüftung (131) und dem Kerbabschnitt (131a) kleiner als ein halber Radius der Sicherheitsentlüftung (131) ist.

7. Batteriepackung aufweisend die Sekundärbatterie (200) nach einem der Ansprüche 1 bis 6.

## Revendications

1. Batterie secondaire (200) comprenant :
un ensemble d'électrodes (110) dans lequel des électrodes et des séparateurs (114) sont empilés en alternance pour être enroulés ;
un boîtier cylindrique (120) comprenant une partie réceptrice (121), dans laquelle est reçu l'ensemble électrode (110), le boîtier (120) possédant une partie supérieure ouverte ; et
un ensemble de couvercle (130) configuré pour couvrir une ouverture du boîtier (120),
l'ensemble de couvercle (130) comprenant un évent de sécurité (131) composé d'une encoche (131a) qui se rompt lorsqu'une pression interne de la batterie augmente,
la partie d'encoche (131a) présentant une forme circulaire en vue en plan,
l'ensemble électrode (110) comprenant une languette d'électrode (240) reliée à chacune des électrodes (113),
les électrodes (113) comprenant une électrode positive (112) et une électrode négative (111),
la languette d'électrode (240) comprenant une languette d'électrode positive (241) reliée à l'électrode positive (112),
la languette d'électrode positive (241) étant agencée sur un côté supérieur de l'ensemble électrode (110) et étant connectée à une extrémité inférieure de l'évent de sécurité (131), et
la borne externe (250) étant reliée à une extrémité supérieure de l'évent de sécurité (131),
l'évent de sécurité (131) comprenant une partie de rupture (R) qui se rompt le long de la partie d'encoche (131a) sur un côté central de celui-ci, et
lorsque la pression interne de la batterie est supérieure ou égale à une pression d'évent, la partie d'encoche (131a) se rompt, de sorte que la partie de rupture (R) se sépare de l'évent de sécurité (131) ;
**caractérisé en ce que**
la languette d'électrode (240) est reliée à un côté intérieur (131b) de la partie d'encoche (131a) de l'évent de sécurité (131) dans la vue en plan,
la borne externe (250) est reliée à un côté extérieur (131c) de la partie d'encoche (131a) de l'évent de sécurité (131) dans la vue en plan, et
un film isolant est appliqué sur la surface extérieure de la languette d'électrode positive (241).

2. Batterie secondaire (200) selon la revendication 1, la languette d'électrode positive (241) étant soudée à une extrémité inférieure de l'évent de sécurité (131), et la borne externe (250) étant soudée à une extrémité supérieure de l'évent de sécurité (131).

3. Batterie secondaire (200) selon la revendication 1, la borne externe (250) étant agencée comme un fil de connexion d'un bloc externe ou d'une application.

4. Batterie secondaire (200) la revendication 1, la partie d'encoche (131a) étant formée dans une partie centrale de l'évent de sécurité (131) dans la vue en plan.

5. Batterie secondaire (200) selon la revendication 1, l'ensemble du couvercle (130) comprenant en outre une garniture d'étanchéité (132) configurée pour sceller un écart entre l'évent de sécurité (131) et le boîtier (120) et isoler l'un de l'autre l'évent de sécurité (131) et le boîtier (120),
le boîtier (120) comprenant un élément de sertissage (123) formé pour entourer la garniture d'étanchéité (132) afin de fixer l'ensemble du couvercle (130).

6. Batterie secondaire (200) selon la revendication 1, une distance entre un axe central de l'évent de sécurité (131) et la partie d'encoche (131a) étant inférieure à la moitié d'un rayon de l'évent de sécurité (131).

7. Bloc-batterie comprenant la batterie secondaire (200) selon une quelconque des revendications 1 à 6.
